# EUROPÄISCHE PATENTSCHRIFT

(11) **EP 2 908 407 B1**
(45) Veröffentlichungstag und Bekanntmachung des Hinweises auf die Patenterteilung: **02.01.2019**
(21) Anmeldenummer: 15153872.5
(22) Anmeldetag: 05.02.2015
(51) Int. Cl.: H02K 1/27, H02K 5/128, H02K 15/12

(54) **Elektrischer Antriebsmotor, Pumpe und Haushaltsgerät mit einer solchen Pumpe**
Electric drive motor, pump and household appliance comprising such a pump
Moteur d'entraînement électrique, pompe et appareil ménager doté d'une telle pompe

(30) Priorität: 12.02.2014 DE 102014202572
(43) Veröffentlichungstag der Anmeldung: 19.08.2015
(73) Patentinhaber: BSH Bosch und Siemens Hausgeräte GmbH, 81739 München (DE)
(72) Erfinder: Binder, Alfred, 72406 Bisingen (DE); Kalavsky, Michal, 04023 Kosice (SK); Lutz, Stephan, 86637 Zusamaltheim (DE); Pertermann, Hans-Holger, 01259 Dresden (DE)

(56) Entgegenhaltungen:
- EP-A1- 1 788 690
- EP-A2- 1 967 288
- DE-U1- 8 427 707
- JP-A- H0 919 091
- JP-A- H01 286 747
- JP-A- 2002 034 188
- US-A1- 2004 061 395
- US-A1- 2012 313 463

## Beschreibung

Die Erfindung betrifft einen elektrischen Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und mehrere um wenigstens eine Mantelfläche des Magnetträgers verteilt angeordnete Permanentmagnete aufweist, die jeweils wenigstens eine Außenoberfläche aufweisen und die mittels eines durch Umspritzen des Magnetträgers hergestellten Kunststoffkörpers an dem Magnetträger befestigt sind, wobei der Magnetträger einen polygonförmigen Querschnitt aufweist, wobei jeder Permanentmagnet eine in Richtung des Magnetträgers weisende ebene Grundfläche und eine Außenoberfläche mit einer zylindermantelsegmentförmigen Gestalt aufweist, wobei die Permanentmagnete an ihrer dem Ringspalt zugewandten Außenoberfläche durch den Kunststoffkörper derart form- und/oder kraftschlüssig gehalten sind, dass zumindest ein Teil dieser Außenoberflächen im Ringspalt freiliegt.

Die Erfindung betrifft außerdem eine Pumpe mit einem solchen Antriebsmotor und ein Haushaltsgerät, insbesondere eine Geschirrspülmaschine, Waschmaschine oder Trockner, mit einem solchen elektrischen Antriebsmotor und/oder einer solchen Pumpe.

Ein elektrischer Antriebsmotor der eingangs genannten Art ist z.B. aus der DE 84 27 707 U1 bekannt. Beim Rotor der DE 84 27 707 U1 sind Magnetsegmente am Außenumfang eines rotierenden Tragkörpers aus weichmagnetischem Material dadurch angebracht, dass in Schlitze des Tragkörpers und zwischen den Magnetsegmenten Kunststoffmaterial eingespritzt wird. Die Magnetsegmente sind dadurch auf dem Tragkörper durch einen im Inneren des Tragkörpers verankerten Kunststoff- Käfig gehalten.

Die WO 01/11756 A1 beschreibt einen bürstenlosen elektrischen Motor einer Pumpe. Der Rotor des Motors besteht aus einem Blechpaket, dessen Oberfläche im Wesentlichen eine prismatische Form aufweist. An den Oberflächen sind Magnetsegmente angeordnet, die im Wesentlichen rechteckige Querschnitte und ebene Seitenflächen aufweisen. Die Magnetsegmente sind dadurch mit dem Blechpaket verbunden, dass sie durch eine Kunststoffschmelze vollständig überdeckt werden. Die Kunststoffschmelze bildet dabei einen Zylinderkörper des Rotors, in dem die Magnetsegmente vollständig eingebettet sind.

Der Rotor der US 2012/0313463 A1 weist im Querschnitt betrachtet im Inneren als magnetischen Rückschluss vier "arcs of steel 109", d.h. vier Kreisbogenabschnitte aus Stahl auf, die jeweils mit einer verbleibenden Umfangslücke zwischen je zwei in Umfangsrichtung benachbarten "arcs of steel" zu einem Kreisring zusammengesetzt sind. Auf diesem sind außen vier einzelne (im Querschnitt betrachtet) kreisbogenabschnittsförmige Magnete angeordnet.

Auch beim Rotor der Figur 1 der JP 2002034188 A ist im Querschnitt betrachtet ein ferromagnetisches Joch in Form eines Kreisrings vorgesehen. Auf diesem sitzen außen einzelne Magnete auf, die jeweils eine kreisbogenabschnittsförmige Querschnittsform aufweisen. Sie sind durch ein "resin 14" auf dem Joch lagefixiert.

Beim Rotor der US 2004/0061395 A1 sind (im Querschnitt betrachtet) die einzelnen Magnete ebenfalls als kreisbogenabschnittsartige Elemente ausgebildet und in Form eines Magnetrings in einem kreisbogenförmigen Käfig gehaltert. Die inneren Oberflächen der Magnete sind in Kontakt mit einem metallischen Einlegeteil (Abschnitt [0064]: "and the inner surfaces of the magnets are in contact with the metal insert 17").

Auch beim Rotor der EP 1 788 690 A1 sind die Magnete jeweils im Querschnitt betrachtet kreisbogenabschnittsförmig ausgebildet und am Außenumfang eines kreiszylinderförmigen Kerns angeordnet, der gemäß als Blechpaket "lamination packet" ausgebildet ist und als magnetischer Rückschluss für die Magnetfelder der Magnete 10 dient.

Beim Rotor der JP H09 019091 A sind Einzelmagnete um einen kreisrunden Rotorkern angeordnet. Die Lücke zwischen je zwei benachbarten Magneten und eine der Lücke im Rotorkern zugeordnete, schwalbenschwanzförmige Nut sind mit einem Harzformteil ausgefüllt.

Die JP H01 286747 A betrifft einen Motor einer Rezirkulationspumpe in einem Atomreaktor. Das Eisenmaterial des Motorkerns enthält lediglich 0,4 bis 2% Chrom. Dadurch ist die Korrosionsfestigkeit des Motors ohne Verlust seiner magnetischen Eigenschaften verbessert.

Die EP 1 967 288 A2 sieht auf dem Gebiet der Öl- und Gasindustrie eine Rotorschaft- und Statoranordnung für z.B. Turboexpander, Pumpen, Kompressoren, ... mit magnetischen Lagern zur Abstützung eines kreiszylinderförmigen Rotorschafts vor. Ihr Abschnitt [0045] gibt als Material für den Rotorschaft "a magnetic steel of type 17-4PH stainless steel alloy, a precipitation hardened martensitic stainless steel alloy 10 20 wt% chromium based on total weight of the precipitation hardened martensitic stainless steel" an und macht klar, dass dies allerdings zu magnetischen Verlusten führt.

Die Aufgabe der Erfindung ist es, einen elektrischen Antriebsmotor für eine Pumpe, eine Pumpe mit einem solchen elektrischen Antriebsmotor, und ein Haushaltsgerät mit einem solchen elektrischen Antriebsmotor und/oder einer solchen Pumpe zu schaffen, die kostengünstig ist und eine verbesserte Lebensdauer und/oder einen verbesserten Wirkungsgrad aufweist.

Die Aufgabe der Erfindung wird gelöst durch einen elektrischen Antriebsmotor mit den Merkmalen des Anspruchs 1:
Erfindungsgemäß weist ein elektrischer Antriebsmotor für eine Pumpe eine elektrisch ansteuerbare Statorwicklung und einen im Feld der Statorwicklung unter Belassen eines Ringspaltes drehantreibbar gelagerten Rotor auf, der eine Motorwelle, einen auf der Motorwelle sitzenden Magnetträger und mehrere um wenigstens eine Mantelfläche des Magnetträgers verteilt angeordnete Permanentmagnete aufweist, die jeweils wenigstens eine Außenoberfläche aufweisen und die mittels eines durch Umspritzen des Magnetträgers hergestellten Kunststoffkörpers an dem Magnetträger befestigt sind, wobei der Magnetträger einen polygonförmigen Querschnitt aufweist, wobei jeder Permanentmagnet eine in Richtung des Magnetträgers weisende ebene Grundfläche und eine Außenoberfläche mit einer zylindermantelsegmentförmigen Gestalt aufweist, und wobei die Permanentmagnete an ihrer dem Ringspalt zugewandten Außenoberfläche durch den Kunststoffkörper derart form- und/oder kraftschlüssig gehalten sind, dass zumindest ein Teil dieser Außenoberflächen im Ringspalt freiliegt. Erfindungsgemäß ist der Magnetträger aus einem ferromagnetischen Chromstahl, nämlich aus einem ferritischen oder martensitischen Chromstahl mit wenigstens 10,5% Chromanteil hergestellt.

Insbesondere kann der aus einem ferromagnetischen Chromstahl hergestellte Magnetträger einen hexagonalen Querschnitt aufweisen.

Insbesondere kann der Kunststoffkörper als ein Kunststoffkäfig ausgebildet sein, der den jeweils freiliegenden Teil der Außenoberfläche jeden Permanentmagnets form- und/oder kraftschlüssig einfasst.

Beispielsweise im Falle eines Nassläufermotors sind dabei die dem Ringspalt zuweisenden Außenoberflächen jeden Permanentmagnets von der in dem Ringspalt vorhandenen Flüssigkeit benetzt. Beispielsweise im Falle eines Trockenläufermotors sind dabei die dem Ringspalt zuweisenden Außenoberflächen jeden Permanentmagnets von der in dem Ringspalt vorhandenen Luft oder Gas umspült.

Der durch das Umspritzen gebildete Kunststoffkäfig kann eine Umfangsfläche aufweisen, die sich mit den Außenoberflächen der Permanentmagnete, die dem Ringspalt zugewandt sind, zu einer zylindrischen Mantelwand ergänzen, welche eine äußere Mantelwand des Rotors bildet. Die Außenoberflächen der Permanentmagnete können sich insoweit bündig an die Umfangsfläche des Kunststoffkäfigs anschließen, insbesondere dabei auf demselben Radius liegen.

Die Permanentmagnete können mittels eines als Kunststoffkäfig ausgebildeten Kunststoffkörpers an dem Magnetträger befestigt sein, der unter Freilassen jeweils eines dem Ringspalt zuweisenden Teils der Außenoberflächen, jeden Permanentmagnet rahmenartig form- und/oder kraftschlüssig einfasst.

Um jeden Permanentmagnet durch den Kunststoffkörper, insbesondere durch den Kunststoffkäfig form- und/oder kraftschlüssig, insbesondere rahmenartig einfassen zu können, kann jeder Permanentmagnet wenigstens eine Fase aufweisen, insbesondere wenigstens eine um seine Außenoberfläche umlaufende Fase aufweisen, die von dem Kunststoffkörper, insbesondere von dem Kunststoffkäfig form- und/oder kraftschlüssig eingefasst ist.

Damit das von der elektrisch ansteuerbaren Statorwicklung erzeugte Drehfeld mit hohem Wirkungsgrad auf den Rotor einwirken kann, wird erfindungsgemäß die Breite des Ringspaltes so weit wie möglich reduziert. Dies erfolgt erfindungsgemäß dadurch, dass der Rotor derart aufgebaut ist, dass die Außenoberflächen der Permanentmagnete unmittelbar an den Ringspalt angrenzen. Da bei einer solchen Ausbildung des Rotors beispielsweise kein Stahltopf vorhanden, der die Permanentmagnete über ihren Umfang vollständig einkapselt und die Permanentmagnete auch nicht vollständig von Kunststoffmaterial eingeschlossen werden, kann der Abstand der Außenoberflächen der Permanentmagnete zu der Statorwicklung deutlich reduziert werden, wodurch sich der Wirkungsgrad des elektrischen Antriebsmotors erhöht. Auch wenn eine solche Verbesserung des Wirkungsgrades auch bei Verwendung von Permanentmagnete aus einem Seltene Erden Material eintritt, so ist eine Ausbildung des Rotors, bei dem die Außenoberflächen der Permanentmagnete unmittelbar an den Ringspalt angrenzen, besonders dann sinnvoll, wenn statt teuren Seltene Erden Magnete vorzugsweise ferritische, insbesondere hartferritische Permanentmagnete verwendet werden, welche eine deutlich geringere magnetische Permeabilität aufweisen als Seltene Erden Magnete. Hinsichtlich einer Kosteneinsparung haben jedoch ferritische, insbesondere hartferritische Permanentmagnete Vorteile.

Indem jeder Permanentmagnet eine an den Ringspalt angrenzende Außenoberfläche aufweist, welche durch wenigstens eine um die Außenoberfläche umlaufende Fase begrenzt ist und die wenigstens eine Fase von dem Kunststoffkäfig formschlüssig eingefasst ist, kann eine möglichst große Fläche der Außenoberfläche der Permanentmagnete unmittelbar an den Ringspalt angrenzen, wobei durch die erfindungsgemäß um die Außenoberfläche umlaufende wenigstens eine Fase die Permanentmagnete durch den Kunststoffkäfig formschlüssig an dem Magnetträger gehalten werden, ohne dass es eines separaten Stahltopfes oder eines die Permanentmagnete vollständig einschließenden Kunststoffkäfigs bedarf, wodurch die Permanentmagnete zwangsläufig in einem größeren Abstand von der Statorwicklung anzuordnen wären.

Alle Permanentmagnete eines Rotors sind vorzugsweise identisch ausgebildet. Sie können insbesondere in gleichen Abständen voneinander entfernt über den Umfang des Magnetträgers verteilt angeordnet sein. Die Außenoberflächen der Permanentmagnete weisen eine zylindermantelsegmentförmige Gestalt auf. Die über den Umfang des Magnetträgers verteilt angeordneten Permanentmagnete ergänzen sich in ihren Außenoberflächen insoweit zu einer im Wesentlichen zylindrischen Außenfläche, die nur durch geringfügige Stege des Kunststoffkäfigs unterbrochen sind.

Dadurch, dass jeder Permanentmagnet wenigstens eine umlaufende Fase aufweist, können die um den Magnetträger angeordneten Permanentmagnete formschlüssig durch den umspritzten Kunststoffkäfig an dem Magnetträger derart befestigt werden, dass der Kunststoffkäfig zusammen mit den Permanentmagneten eine glattwandige zylindrische Mantelwand des Rotors bildet, die Fenster ausbildet, welche unmittelbar von den Außenoberflächen der Permanentmagnete gebildet werden.

So kann jeder Permanentmagnet eine vordere Stirnwand, eine hintere Stirnwand, eine in Drehrichtung des Rotors vorauseilende Seitenwand und eine nacheilende Seitenwand aufweisen, wobei die wenigstens eine Fase dadurch gebildet wird, dass die vordere Stirnwand, die hintere Stirnwand, die vorauseilende Seitenwand und die nacheilende Seitenwand jeweils aus einer zu einer in Richtung des Magnetträgers weisenden Grundfläche des Permanentmagneten senkrechten Lage um einen Winkel nach innen angestellten Lage abgeschrägt ausgebildet sind.

Die vordere Stirnwand des Permanentmagneten ist insoweit eine Seitenwand des Permanentmagneten, die in einer Einbaulage des Permanentmagneten an dem Rotor in Richtung des vorderen Wellenendes der Motorwelle weist, welches Wellenende insbesondere im Falle einer Pumpe das Pumpenrad trägt. Demgemäß ist die hintere Stirnwand des Permanentmagneten eine der vorderen Stirnwand gegenüberliegende Seitenwand des Permanentmagneten, die in einer Einbaulage des Permanentmagneten an dem Rotor von dem vorderen Wellenendes der Motorwelle weg weist. Mit seiner Grundfläche liegt der jeweilige Permanentmagnet an einer Mantelfläche des Magnetträgers insbesondere berührend an.

Die Eigenschaft, dass die vordere Stirnwand, die hintere Stirnwand, die vorauseilende Seitenwand und die nacheilende Seitenwand jeweils aus einer zu einer in Richtung des Magnetträgers weisenden Grundfläche des Permanentmagneten senkrechten Lage um einen Winkel nach innen angestellten Lage abgeschrägt ausgebildet sind, kann insoweit anders ausgedrückt bedeuten, dass die Permanentmagnete eine pyramidenstumpfartige Gestalt aufweisen, wobei die größere Grundfläche des Pyramidenstumpfes durch die Grundfläche des Permanentmagneten gebildet wird und die kleinere Deckfläche des Pyramidenstumpfes durch die Außenoberfläche des Permanentmagneten gebildet wird und insbesondere das durch die gedachte Spitze laufende Lot die Grundfläche schneidet. Die Grundfläche kann dabei insbesondere rechteckig oder quadratisch sein. Die Höhe des Permanentmagneten ist dabei um ein Vielfaches kleiner als die Länge oder Breite der Grundfläche.

Der Winkel, also der Neigungswinkel der Seitenflächen des pyramidenstumpfartigen Permanentmagneten gegenüber seiner Grundfläche nach innen kann in einem Wertebereich von 1 bis 20 Grad liegt, insbesondere einen Wert von 8 Grad aufweist.

Unter einem solchen Winkel wird ein besonders ausgewogenes Verhältnis zwischen der Anforderung an einer möglichst großen, magnetisch wirksamen Außenoberfläche des Permanentmagneten und eines möglichst sicheren formschlüssigen Umgreifens der Permanentmagnete durch den Kunststoffkäfig zur sicheren Fixierung an dem Magnetträger.

Generell können die die vordere Stirnwand, die hintere Stirnwand, die vorauseilende Seitenwand und die nacheilende Seitenwand jeweils unmittelbar verbindenden Seitenkanten zur Bildung einer einzigen, kantenlos um die Außenoberfläche des Permanentmagneten umlaufende Fase abgerundet ausgebildet sind. Es kann also statt vier geraden Kantenfasen, die an vier Ecken aufeinandertreffen, durch eine Abrundung der Ecken insoweit eine einzige umlaufende Fase gebildet werden, welche den Permanentmagneten eckenlos umläuft. Eine solche Fase kann in günstiger Weise gefertigt werden, kann Materialspannungen im Permanentmagneten reduzieren und eine Fixierung durch den umspritzten Kunststoffkäfig begünstigen.

In einer abgewandelten Ausführungsform können wenigstens eine die vordere Stirnwand, die hintere Stirnwand, die vorauseilende Seitenwand und/oder die nacheilende Seitenwand jeweils mit der Außenoberfläche unmittelbar verbindende Oberflächenkante, insbesondere die die vordere Stirnwand und die hintere Stirnwand jeweils mit der Außenoberfläche unmittelbar verbindende Oberflächenkanten mit einer zusätzlichen Fase versehen sein.

In einer weiteren Ausführungsform können alternativ oder ergänzend zu einer anderen Ausführungsform wenigstens eine die vordere Stirnwand, die hintere Stirnwand, die vorauseilende Seitenwand und/oder die nacheilende Seitenwand jeweils mit der Außenoberfläche unmittelbar verbindende Oberflächenkante, insbesondere die die vorauseilende Seitenwand und die nacheilende Seitenwand jeweils mit der Außenoberfläche unmittelbar verbindende Oberflächenkanten gestuft ausgebildet sein.

Durch eine oder mehrere zusätzlicher Fasen und/oder Stufen kann das Kunststoffmaterial des Kunststoffkäfigs die Permanentmagnete besonders gut umfassen bzw. einschließen. Dabei kann insbesondere sichergestellt sein, dass im Bereich der Fasen und/oder der Stufen das Kunststoffmaterial eine Mindestschichtdicke von ca. 0,5 bis 0,7, insbesondere 0,6 Millimeter aufweist. So kann sichergestellt sein, dass alle Fasen und/oder Stufen beim Umspritzen vollständig mit Kunststoffmaterial ausgefüllt werden können und auch nach einem Aushärten des Kunststoffmaterials der Kunststoffkäfig an seinen Rändern zur Außenoberfläche der Permanentmagnete hin ausreichend formstabil und/oder resistent gegen Abnutzung, insbesondere Abschälen ist.

In den jeweiligen Ausführungsformen kann die gestuft ausgebildete Oberflächenkante durch eine Ausnehmung gebildet werden, die im axialen Querschnitt des Permanentmagneten eine Breite aufweist, die zwischen 10% und 15%, insbesondere 12% oder 13% der Gesamtbreite des Permanentmagneten beträgt.

Die gestuft ausgebildete Oberflächenkante kann durch eine Ausnehmung gebildet werden, die im axialen Querschnitt des Permanentmagneten eine Mindesthöhe von wenigstens 0,5 Millimeter, insbesondere von wenigstens 0,6 Millimeter aufweist.

In einer weiter abgewandelten Ausführungsform kann wenigstens eine die vordere Stirnwand, die hintere Stirnwand, die vorauseilende Seitenwand und/oder die nacheilende Seitenwand jeweils mit der in Richtung des Magnetträgers weisenden Grundfläche des Permanentmagneten unmittelbar verbindende Grundkante mit einer weiteren Fase versehen sein.

Erfindungsgemäß weist jeder Permanentmagnet eine in Richtung des Magnetträgers weisende ebene Grundfläche auf und der Magnetträger weist einen polygonförmigen, insbesondere hexagonalen Querschnitt auf.

Ergänzend kann in allen Ausführungsformen der Magnetträger eine Nabe zur Aufnahme der Motorwelle aufweisen, deren innere Mantelwand mit vorspringenden Rippen versehen ist, die sich insbesondere in axialer Richtung erstrecken. Die Rippen bewirken eine besonders zuverlässige Befestigung des Magnetträgers auf der Motorwelle.

Die Erfindung betrifft auch eine Pumpe, aufweisend einen elektrischen Antriebsmotor wie erfindungsgemäß beschrieben, bei welcher der Rotor in einem Nassraum der Pumpe drehantreibbar gelagert ist und die Außenoberflächen der Permanentmagnete in Kontakt zu einer in dem Ringspalt des elektrischen Antriebsmotors befindlichen Flüssigkeit des Nassraumes stehen.

Die im Nassraum befindliche Flüssigkeit dient unter anderem der Kühlung und/oder Schmierung des Rotors bzw. der Lager des Rotors. Um einen hohen elektromagnetischen Wirkungsgrad zu erreichen, wird die äußere Mantelwand des Rotors, d.h. des Rotormagneten konstruktiv möglichst nahe an die Statorwicklung herangeführt. Dies hat zur Folge, dass zwischen Rotor bzw. Rotormagnet und der Innenwand des Nassraums nur ein sehr geringer Spalt vorhanden ist, der insbesondere während einer Rotation des Rotors nur relativ wenig von der Flüssigkeit durchströmt wird. Insoweit kann ein von einem Flüssigkeitszulauf abgewandter Nassraumbereich nur sehr schwer allein über diesen Spalt durchspült werden. Insbesondere kann in einem solchen hinteren, d.h. dem Pumpenrad abgewandten Nassraumbereich sich in unerwünschter Weise Luft- und/oder Dampfblasen ansammeln. Aufgrund der Rotation des Rotors sammeln sich tendenziell Luft- und/oder Dampfblasen im achsnahen Zentrum des Nassraumes nahe der Motorwelle und nicht in einem äußeren Umfang nahe des Spaltes. Mittels wenigstens eines im Magnetträger angeordneten Strömungskanals kann die Flüssigkeit besonders gut zirkulieren und insbesondere können Luft- und/oder Dampfblasen herausgeführt werden, so dass keine Gefahr besteht, dass die Lager des Rotors trockenlaufen, was die Lebensdauer der Pumpe und den Wirkungsgrad der Pumpe reduzieren würde. Durch ein Abführen von Luft- und/oder Dampfblasen läuft der Antriebsmotor und damit auch die Pumpe außerdem leiser.

Die Pumpe kann ein von dem elektrischen Antriebsmotor antreibbares Pumpenrad aufweisen und die Motorwelle des elektrischen Antriebsmotors ergänzend eine Rändelung aufweisen, auf welcher das Pumpenrad befestigt ist. Damit wird eine besonders zuverlässige Befestigung des Pumpenrads an der Motorwelle erreicht, was die Lebensdauer der Pumpe erhöhen kann.

Die folgenden Merkmale können einzeln oder in Kombination zueinander in unterschiedlichen Ausführungsformen Anwendung finden: Generell kann es sich bei dem Antriebsmotor um einen bürstenlosen Gleichstrom-Nassläufer-Pumpenantriebsmotor handeln. Der Rotor kann generell als ein Permanentmagnet-Innenrotor ausgebildet sein. Ganz allgemein kann der Gleichstrom-Pumpenantriebsmotor generell als ein von Flüssigkeit durchströmter Nassläufermotor ausgebildet sein und der Permanentmagnet-Rotor dabei in unmittelbarem Kontakt zur Flüssigkeit stehen. Der Magnetträger kann in allen Ausführungen entweder einstückig ausgebildet sein oder aus einem Blechpaket von mehreren übereinander gestapelten, miteinander verbundenen Blechplatten hergestellt sein.

Der Magnetträger ist erfindungsgemäß aus einem ferromagnetischen Chromstahl hergestellt. Anders ausgedrückt besteht der Magnetträger aus Edelstahl.

Der Magnetträger ist erfindungsgemäß aus einem ferritischen oder martensitischen Chromstahl mit wenigstens 10,5% Chromanteil hergestellt. Der Magnetträger kann aus einem nickelfreien Chromstahl hergestellt sein.

Beispielsweise kann der Magnetträger aus einem Chromstahl mit 16% bis 18% Chromanteil, insbesondere ca. 17% Chromanteil, insbesondere der Werkstoffnummer 1.4016 gemäß EN 10027-2 (X6Cr17, AISI 430) hergestellt sein.

Ergänzend zu einem Magnetträger aus einem ferromagnetischen Chromstahl kann auch die Motorwelle aus einem Chromstahl hergestellt sein. Anders ausgedrückt kann die Motorwelle aus Edelstahl bestehen. Die Motorwelle kann aus einem härtbaren, insbesondere austenitischen oder martensitischen Chromstahl hergestellt sein.

Beispielsweise kann die Motorwelle aus einem Chromstahl mit 15% bis 17% Chromanteil, insbesondere ca. 16% Chromanteil und 3% bis 5% Nickelanteil, insbesondere ca. 4% Nickelanteil, insbesondere der Werkstoffnummer 1.4542 gemäß EN 10027-2 (X5CrNiCuNb16-4, AISI 630) hergestellt sein.

Die Erfindung betrifft außerdem ein Haushaltsgerät, insbesondere eine Geschirrspülmaschine, eine Waschmaschine oder einen Trockner, das einen erfindungsgemäßen elektrischen Antriebsmotor und/oder eine erfindungsgemäße Pumpe, wie beschrieben, aufweist.

Verschiedene konkrete Ausführungsbeispiele erfindungsgemäßer elektrischer Antriebsmotoren sind in der nachfolgenden Beschreibung unter Bezugnahme auf die beigefügten Figuren näher erläutert. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine Querschnittsansicht einer beispielhaften Pumpe eines Haushaltsgeräts mit einem erfindungsgemäßen elektrischen Antriebsmotor in Form eines Nassläufer-Pumpenantriebsmotors,
- Fig. 2: eine perspektivische Explosionsdarstellung einer ersten Ausführungsform eines Permanentmagnet-Innenrotors des erfindungsgemäßen elektrischen Antriebsmotors;
- Fig. 3: eine perspektivische Ansicht des Permanentmagnet-Innenrotors gemäß Fig. 2 in einem zusammengesetzten Zustand;
- Fig. 4: einen einzelnen Permanentmagneten des elektrischen Antriebsmotors nach der ersten Ausführungsform gemäß Fig. 2 und Fig. 3 in einer Frontansicht, einer Seitenansicht, einer Querschnittsansicht und in einer perspektivischen Darstellung;
- Fig. 5: eine Querschnittsansicht des zusammengesetzten Permanentmagnet-Innenrotors der ersten Ausführungsform gemäß Fig. 3;
- Fig. 6: einen einzelnen Permanentmagneten des elektrischen Antriebsmotors nach einer zweiten Ausführungsform in einer Frontansicht, einer Seitenansicht, einer Querschnittsansicht und in einer perspektivischen Darstellung;
- Fig. 7: eine Querschnittsansicht des zusammengesetzten Permanentmagnet-Innenrotors der zweiten Ausführungsform gemäß Fig. 6; und
- Fig. 8: eine perspektivische Explosionsdarstellung einer nicht zur Erfindung gehörenden Ausführungsform eines Permanentmagnet-Innenrotors eines elektrischen Antriebsmotors.

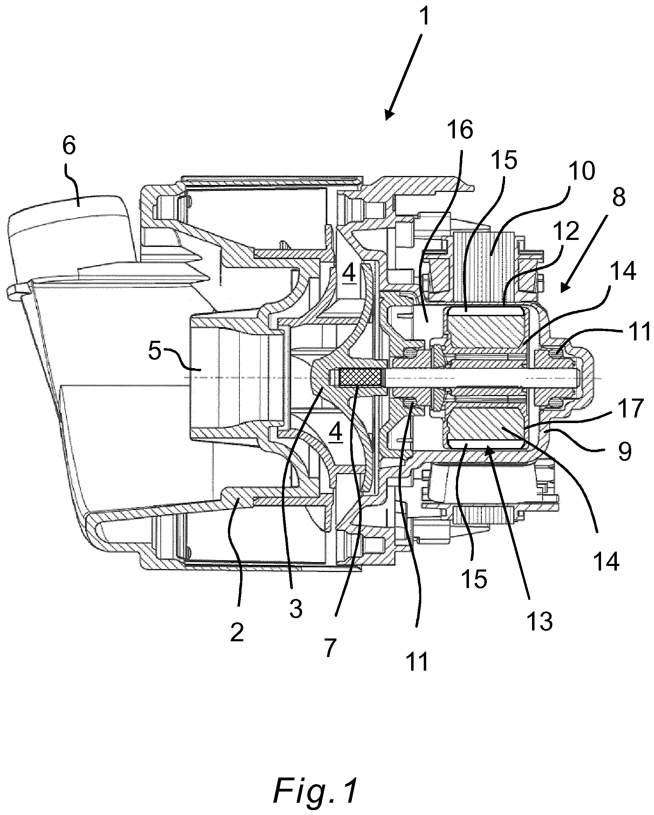

Eine in Fig. 1 beispielhaft dargestellte Pumpe 1 eines Haushaltsgeräts weist ein Pumpengehäuse 2 auf, in dem ein Pumpenrad 3 drehbar angeordnet ist. Das Pumpenrad 3 weist mehrere Schaufeln 4 auf, die ausgebildet und angeordnet sind Flüssigkeit über eine Eintrittsöffnung 5 axial anzusaugen und über eine Austrittsöffnung 6 radial auszustoßen. Im vorliegenden Ausführungsbeispiel bildet die Pumpe 1 folglich eine Kreiselpumpe in der Bauart einer Radialpumpe. Das Pumpenrad 3 sitzt drehfest auf einer Motorwelle 7 eines bürstenlosen Gleichstrom-Nassläufer-Pumpenantriebsmotors 8.

Der Gleichstrom-Nassläufer-Pumpenantriebsmotor 8 ist in einem Motorgehäuse 9 angeordnet. Das Motorgehäuse 9 ist im Falle des vorliegenden Ausführungsbeispiels unmittelbar mit dem Pumpengehäuse 2 verbunden. Gegebenenfalls kann das Motorgehäuse 9 zusammen mit dem Pumpengehäuse 2 eine Baueinheit bilden, oder sogar einteilig ausgebildet sein. Der Gleichstrom-Nassläufer-Pumpenantriebsmotor 8 weist einer elektrisch ansteuerbare Statorwicklung 10 und einen im Feld der Statorwicklung 10 antreibbaren und mittels der Motorwelle 7 im Feld zwischen zwei gegenüberliegenden Lagern 11 drehbar gelagerten Rotor 13 auf.

Der Gleichstrom-Nassläufer-Pumpenantriebsmotor 8 des dargestellten Ausführungsbeispiels ist als ein von Flüssigkeit durchströmter Nassläufermotor ausgebildet, bei dem der Rotor 13 innerhalb eines Motorgehäuses 9 in einem Nassraum 16 gelagert ist, der von Flüssigkeit aus dem Pumpengehäuse 2 durchflutet ist. Die Statorwicklung 10 ist dabei in trockener Umgebung außerhalb des Motorgehäuses 9 angeordnet.

In dargestellten Ausführungsbeispiel weist der Rotor 13 im Wesentlichen die Motorwelle 7, einen auf der Motorwelle 7 drehfest befestigten Magnetträger 14 und an dem Magnetträger 14 mittels eines durch Umspritzen hergestellten Kunststoffkäfigs 17 fixierte Permanentmagnete 15 auf.

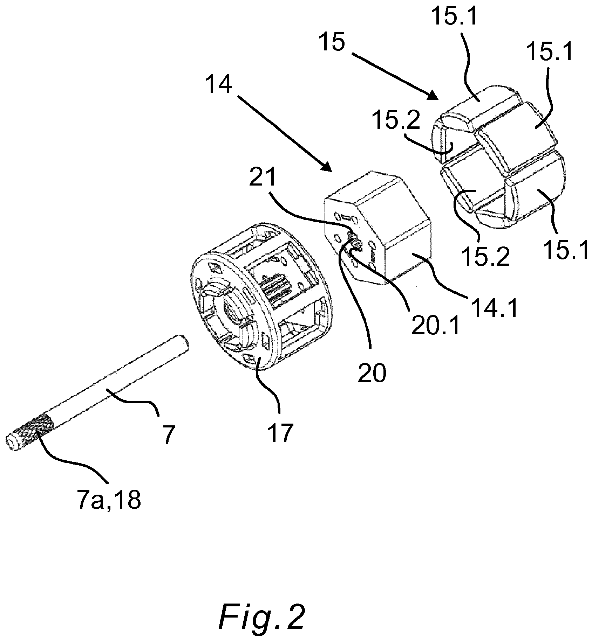

Dieser Permanentmagnet-Innenrotor ist in Fig. 2 in einer explodierten Darstellung näher gezeigt.

Die Motorwelle 7 weist ein vorderes Wellenende 7a auf, an dem das Pumpenrad 3 zu befestigen ist. An diesem vorderen Wellenende 7a weist die Motorwelle 7 an ihrer Außenmantelwand eine Rändelung 18 auf, die ausgebildet ist, das Pumpenrad 3 drehfest auf der Motorwelle 7 zu fixieren.

Die Permanentmagnete 15 des Rotors 13 stehen mit ihren Außenoberflächen 15.1 im Nassraum 16 im Bereich eines Ringspaltes 12 zwischen dem Rotor 13 und der Statorwicklung 10 in unmittelbarem Kontakt zur Flüssigkeit (Fig. 1). Die Permanentmagnete 15 sind aus einem ferromagnetischen Material hergestellt.

Der in dem Nassraum 16 der Pumpe 1 drehantreibbar gelagerte Rotor 13 weist mehrere gleichmäßig über einen Umfang verteilt angeordnete Permanentmagnete 15 auf, deren Außenoberflächen 15.1 in Kontakt zu einer in dem Ringspalt 12 des elektrischen Antriebsmotors 8 befindlichen Flüssigkeit des Nassraumes 16 stehen.

Um die mehreren an wenigstens einer Mantelfläche 14.1 des Magnetträgers 14 verteilt angeordneten Permanentmagnete 15 an dem Magnetträger 14 zu befestigen, werden die Permanentmagnete 15 randseitig rahmenartig mittels eines durch Umspritzen des Magnetträgers 14 hergestellten Kunststoffkäfigs 17 formschlüssig an dem Magnetträger 14 festgehalten.

Damit der durch Umspritzen des Magnetträgers 14 hergestellte Kunststoffkäfig 17 die Permanentmagnete 15 formschlüssig an dem Magnetträger 14 halten kann, weist jeder Permanentmagnet 15 wenigstens eine um die Außenoberfläche 15.1 umlaufende Fase 19 auf, die von dem Kunststoffkäfig 17 ausgefüllt wird, wodurch der jeweilige Permanentmagnet 15 formschlüssig durch den Kunststoffkäfig 17 eingefasst ist.

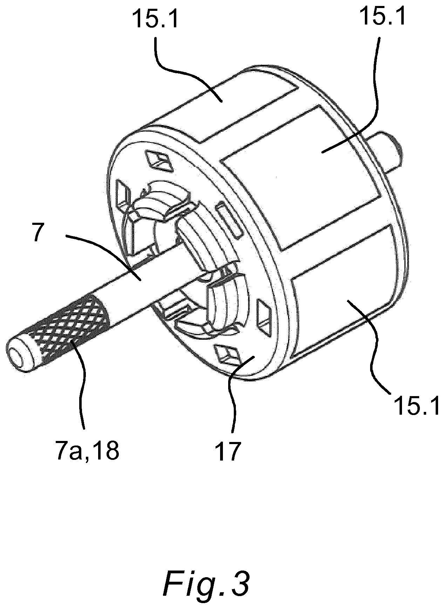

In der ersten Ausführungsform gemäß Fig. 2 bis Fig. 5 weist der Magnetträger 14 einen polygonförmigen, insbesondere hexagonalen Querschnitt auf. Der Magnetträger 14 kann massiv ausgebildet sein, oder aus einem Stapel von mehreren polygonförmigen, insbesondere hexagonalen Stanzblechen in einer dem Fachmann an sich bekannten Weise aufgebaut sein.

Der Magnetträger 14 weist eine Nabe 20 auf, in der die Motorwelle 7 aufgenommen ist. Für eine sichere Befestigung der Motorwelle 7 in dem Magnetträger 14 sind an einer inneren Mantelwand 20.1 der Nabe 20 vorspringende Rippen 21 vorgesehen, die sich insbesondere in axialer Richtung erstrecken.

Auf jeder einzelnen, insbesondere rechteckigen Mantelfläche 14.1 des im Querschnitt polygonförmigen, insbesondere hexagonalen Magnetträgers 14 sitzt jeweils ein separater Permanentmagnet 15 auf. Jeder Permanentmagnet 15 weist eine in Richtung des Magnetträgers 14 weisende, die Mantelfläche 14.1 des Magnetträgers 14 flächig berührende ebene Grundfläche 15.2 auf.

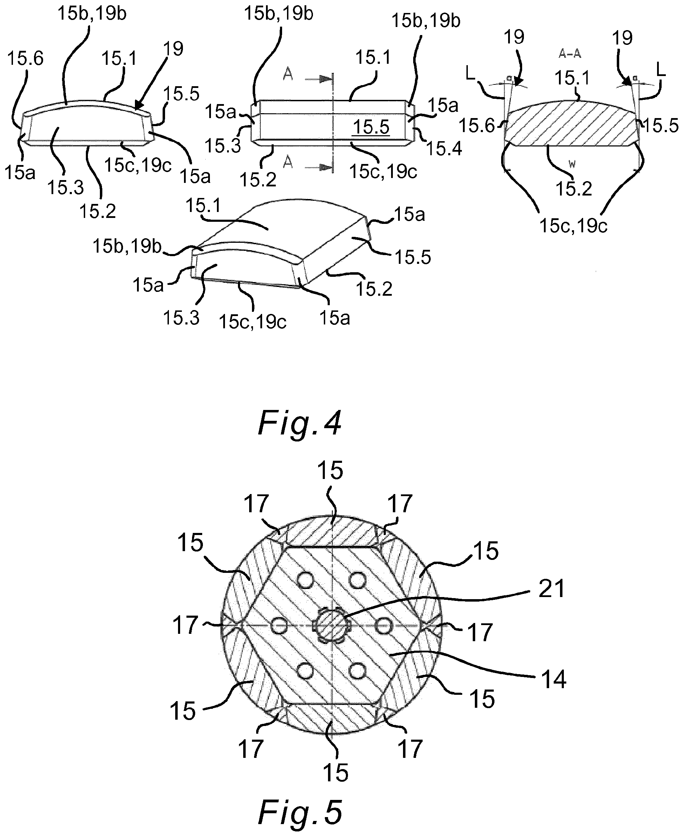

Wie insbesondere in den Darstellungen der Fig. 4 gezeigt, weist jeder Permanentmagnet 15 eine vordere Stirnwand 15.3, eine hintere Stirnwand 15.4, eine in Drehrichtung des Rotors 13 vorauseilende Seitenwand 15.5 und eine nacheilende Seitenwand 15.6 auf. Die erfindungsgemäß wenigstens eine Fase 19 wird dadurch gebildet, dass die vordere Stirnwand 15.3, die hintere Stirnwand 15.4, die vorauseilende Seitenwand 15.5 und die nacheilende Seitenwand 15.6 jeweils aus einer zu einer in Richtung des Magnetträgers 14 weisenden Grundfläche 15.2 des Permanentmagneten 15 senkrechten Lage L um einen Winkel a nach innen angestellten Lage abgeschrägt, wie insbesondere in der Querschnittsdarstellung der Fig. 4 gezeigt, ausgebildet ist. Der Winkel a kann erfindungsgemäß in einem Wertebereich von 1 bis 20 Grad liegen, und weist insbesondere in den dargestellten Ausführungsbeispielen einen Wert von ca. 8 Grad auf.

Die vier Seitenkanten 15a des Permanentmagneten 15, welche die vordere Stirnwand 15.3, die hintere Stirnwand 15.4, die vorauseilende Seitenwand 15.5 und die nacheilende Seitenwand 15.6 jeweils unmittelbar verbinden, sind zur Bildung einer einzigen um die Außenoberfläche 15.1 des Permanentmagneten 15 umlaufende Fase 19 abgerundet ausgebildet.

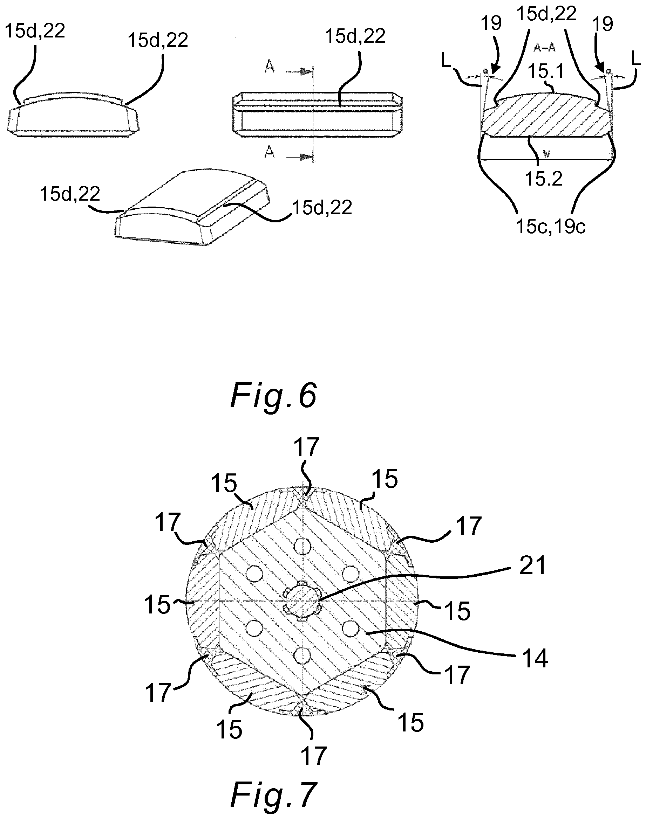

Sowohl in der ersten Ausführungsform der gemäß Fig. 2 bis Fig. 5, als auch in der zweiten Ausführungsform gemäß Fig. 6 und Fig. 7 ist wenigstens eine die vordere Stirnwand 15.3, die hintere Stirnwand 15.4, die vorauseilende Seitenwand 15.5 und/oder die nacheilende Seitenwand 15.6 jeweils mit der Außenoberfläche 15.1 unmittelbar verbindende Oberflächenkante 15b, insbesondere die die vordere Stirnwand 15.3 und die hintere Stirnwand 15.4 jeweils mit der Außenoberfläche 15.1 unmittelbar verbindende Oberflächenkanten15b mit einer zusätzlichen Fase 19b versehen.

In der ersten Ausführungsform gemäß Fig. 2 bis Fig. 5 weisen außerdem die Grundkanten 15c, welche jeweils die vordere Stirnwand 15.3, die hintere Stirnwand 15.4, die vorauseilende Seitenwand 15.5 bzw. die nacheilende Seitenwand 15.6 mit der in Richtung des Magnetträgers 14 weisenden Grundfläche 15.2 des Permanentmagneten 15 unmittelbar verbinden, jeweils einer weitere Fase 19c auf.

Die Querschnittsdarstellung gemäß Fig. 5 zeigt, wie das umspritzte Kunststoffmaterial des Kunststoffkäfigs 17 die Fasen 19 und 19c der Permanentmagnete 15 nach der ersten Ausführungsform formschlüssig umgreift, um die Permanentmagnete 15 an dem Magnetträger 14 zu halten.

In der zweiten Ausführungsform gemäß Fig. 6 und Fig. 7 sind die Permanentmagnete 15 zunächst in ihrer Gestalt analog der ersten Ausführungsform gemäß Fig. 2 bis Fig. 5 ausgebildet. Darüber hinaus weisen die Permanentmagnete 15 der zweiten Ausführungsform zusätzlich gestuft ausgeführte Oberflächenkanten 15d auf.

So kann wenigstens eine die vordere Stirnwand 15.3, die hintere Stirnwand 15.4, die vorauseilende Seitenwand 15.5 und/oder die nacheilende Seitenwand 15.6 jeweils mit der Außenoberfläche 15.1 unmittelbar verbindende Oberflächenkante 15d, insbesondere ausschließlich nur die die vorauseilende Seitenwand 15.5 und die nacheilende Seitenwand 15.6 jeweils mit der Außenoberfläche 15.1 unmittelbar verbindende Oberflächenkanten 15d gestuft ausgebildet sein.

Die gestuft ausgebildete Oberflächenkante 15d wird durch eine Ausnehmung 22 gebildet, die im axialen Querschnitt des Permanentmagneten eine Breite aufweist, die zwischen 10% und 15%, insbesondere 12% oder 13% der Gesamtbreite des Permanentmagneten beträgt. Im axialen Querschnitt des Permanentmagneten weist die durch eine Ausnehmung gebildete, gestufte Oberflächenkante eine Mindesthöhe von wenigstens 0,5 Millimeter, insbesondere von wenigstens 0,6 Millimeter auf.

Auch in der zweiten Ausführungsform ist die wenigstens eine, die vordere Stirnwand 15.3, die hintere Stirnwand 15.4, die vorauseilende Seitenwand 15.5 und/oder die nacheilende Seitenwand 15.6 jeweils mit der in Richtung des Magnetträgers 14 weisenden Grundfläche 15.2 des Permanentmagneten 15 unmittelbar verbindende Grundkante 15c mit der weiteren Fase 19c versehen.

Die Querschnittsdarstellung gemäß Fig. 7 zeigt, wie das umspritzte Kunststoffmaterial des Kunststoffkäfigs 17 die Fasen 19 und 19c und die gestuften Ausnehmungen 22 der Permanentmagnete 15 nach der zweiten Ausführungsform formschlüssig umgreift, um die Permanentmagnete 15 an dem Magnetträger 14 zu halten.

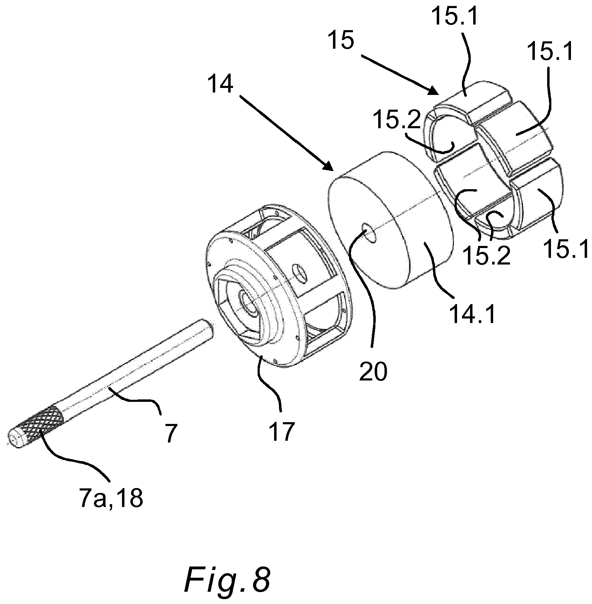

In der nicht zur Erfindung gehörenden Ausführungsform gemäß Fig. 8 weist jeder Permanentmagnet 15 eine in Richtung des Magnetträgers 14 weisende, im Querschnitt kreisbogenförmige Grundfläche 15.2 auf und der Magnetträger 14 weist einen kreisförmigen Querschnitt auf.

### BEZUGSZEICHENLISTE

- 1: Pumpe
- 2: Pumpengehäuse
- 3: Pumpenrad
- 4: Schaufeln
- 5: Eintrittsöffnung
- 6: Austrittsöffnung
- 7: Motorwelle
- 7a: vorderes Wellenende
- 8: Antriebsmotor
- 9: Motorgehäuse
- 10: Statorwicklung
- 11: Lager
- 12: Ringspalt
- 13: Rotor
- 14: Magnetträger
- 14.1: Mantelfläche
- 15: Permanentmagnete
- 15.1: Außenoberfläche
- 15.2: Grundfläche
- 15.3: vordere Stirnwand
- 15.4: hintere Stirnwand
- 15.5: vorauseilende Seitenwand
- 15.6: nacheilende Seitenwand
- 15a: Seitenkanten
- 15b,15d: Oberflächenkante
- 15c: Grundkanten
- 16: Nassraum
- 17: Kunststoffkäfig
- 18: Rändelung
- 19: Fase
- 19b: zusätzliche Fase
- 19c: weitere Fase
- 20: Nabe
- 20.1: innere Mantelwand
- 21: Rippen
- 22: Ausnehmung

## Patentansprüche

1. Elektrischer Antriebsmotor für eine Pumpe (1), aufweisend eine elektrisch ansteuerbare Statorwicklung (10) und einen im Feld der Statorwicklung (10) unter Belassen eines Ringspaltes (12) drehantreibbar gelagerten Rotor (13), der eine Motorwelle (7), einen auf der Motorwelle (7) sitzenden Magnetträger (14) und mehrere um wenigstens eine Mantelfläche (14.1) des Magnetträgers (14) verteilt angeordnete Permanentmagnete (15) aufweist, die jeweils wenigstens eine Außenoberfläche (15.1) aufweisen und die mittels eines durch Umspritzen des Magnetträgers (14) hergestellten Kunststoffkörpers an dem Magnetträger (14) befestigt sind, wobei der Magnetträger (14) einen polygonförmigen Querschnitt aufweist, wobei jeder Permanentmagnet (15) eine in Richtung des Magnetträgers (14) weisende ebene Grundfläche (15.2) und eine Außenoberfläche (15.1) mit einer zylindermantelsegmentförmigen Gestalt aufweist, und wobei die Permanentmagnete (15) an ihren dem Ringspalt (12) zugewandten Außenoberflächen (15.1) durch den Kunststoffkörper derart form- und/oder kraftschlüssig gehalten sind, dass zumindest ein Teil dieser Außenoberflächen (15.1) im Ringspalt (12) freiliegt, **dadurch gekennzeichnet,**
**dass** der Magnetträger (14) aus einem ferromagnetischen Chromstahl, nämlich aus einem ferritischen oder martensitischen Chromstahl mit wenigstens 10,5% Chromanteil hergestellt ist.

2. Elektrischer Antriebsmotor nach Anspruch 1, **dadurch gekennzeichnet, dass** der aus einem ferromagnetischen Chromstahl hergestellte Magnetträger (14) einen hexagonalen Querschnitt aufweist.

3. Elektrischer Antriebsmotor nach einem der Ansprüche 1 oder 2, **dadurch gekennzeichnet, dass** der Magnetträger (14) aus einem nickelfreien Chromstahl hergestellt ist.

4. Elektrischer Antriebsmotor nach einem der vorhergehenden Ansprüche, **dadurch gekennzeichnet, dass** der Magnetträger (14) aus einem Chromstahl mit 16% bis 18% Chromanteil, insbesondere ca. 17% Chromanteil, insbesondere der Werkstoffnummer 1.4016 gemäß EN 10027-2 (X6Cr17, AISI 430), hergestellt ist.

5. Elektrischer Antriebsmotor nach einem der vorhergehenden Ansprüche, **dadurch gekennzeichnet, dass** der Kunststoffkörper als ein Kunststoffkäfig (17) ausgebildet ist, der den jeweils freiliegenden Teil der Außenoberfläche (15.1) jeden Permanentmagnets (15) form- und/oder kraftschlüssig einfasst.

6. Elektrischer Antriebsmotor nach einem der vorhergehenden Ansprüche, **dadurch gekennzeichnet, dass** jeder Permanentmagnet (15) wenigstens eine Fase (19) aufweist, insbesondere wenigstens eine um seine Außenoberfläche (15.1) umlaufende Fase (19) aufweist, die von dem Kunststoffkörper formschlüssig eingefasst ist.

7. Elektrischer Antriebsmotor nach Anspruch 6, **dadurch gekennzeichnet, dass** jeder Permanentmagnet (15) eine vordere Stirnwand (15.3), eine hintere Stirnwand (15.4), eine in Drehrichtung des Rotors (13) vorauseilende Seitenwand (15.5) und eine nacheilende Seitenwand (15.6) aufweist und die wenigstens eine Fase (19) dadurch gebildet wird, dass die vordere Stirnwand (15.3), die hintere Stirnwand (15.4), die vorauseilende Seitenwand (15.5) und die nacheilende Seitenwand (15.6) jeweils aus einer zu einer in Richtung des Magnetträgers (14) weisenden Grundfläche (15.2) des Permanentmagneten (15) senkrechten Lage um einen Winkel (a) nach innen angestellten Lage (L) abgeschrägt ausgebildet sind.

8. Elektrischer Antriebsmotor nach Anspruch 7, **dadurch gekennzeichnet, dass** der Winkel (a) in einem Wertebereich von 1 bis 20 Grad liegt, insbesondere einen Wert von 8 Grad aufweist.

9. Elektrischer Antriebsmotor nach einem der Ansprüche 6 bis 8, **dadurch gekennzeichnet, dass** die die vordere Stirnwand (15.3), die hintere Stirnwand (15.4), die vorauseilende Seitenwand (15.5) und die nacheilende Seitenwand (15.6) jeweils unmittelbar verbindenden Seitenkanten (15a) zur Bildung einer einzigen um die Außenoberfläche (15.1) des Permanentmagneten (15) umlaufende Fase (19) abgerundet ausgebildet sind.

10. Elektrischer Antriebsmotor nach einem der Ansprüche 6 bis 8, **dadurch gekennzeichnet, dass** wenigstens eine die vordere Stirnwand (15.3), die hintere Stirnwand (15.4), die vorauseilende Seitenwand (15.5) und/oder die nacheilende Seitenwand (15.6) jeweils mit der Außenoberfläche (15.1) unmittelbar verbindende Oberflächenkante (15b), insbesondere die die vordere Stirnwand (15.3) und die hintere Stirnwand (15.4) jeweils mit der Außenoberfläche (15.1) unmittelbar verbindende Oberflächenkanten (15b), mit einer zusätzlichen Fase (19b) versehen sind.

11. Elektrischer Antriebsmotor nach einem der Ansprüche 1 bis 10, **dadurch gekennzeichnet, dass** wenigstens eine die vordere Stirnwand (15.3), die hintere Stirnwand (15.4), die vorauseilende Seitenwand (15.5) und/oder die nacheilende Seitenwand (15.6) jeden Permanentmagnets (15) jeweils mit der Außenoberfläche (15.1) unmittelbar verbindende Oberflächenkante (15d), insbesondere die die vorauseilende Seitenwand (15.5) und die nacheilende Seitenwand (15.6) jeweils mit der Außenoberfläche (15.1) unmittelbar verbindende Oberflächenkanten (15d), gestuft ausgebildet sind.

12. Elektrischer Antriebsmotor nach Anspruch 11, **dadurch gekennzeichnet, dass** die gestuft ausgebildete Oberflächenkante (15d) durch eine Ausnehmung (22) gebildet wird, die im axialen Querschnitt des Permanentmagneten (15) eine Breite aufweist, die zwischen 10% und 15%, insbesondere 12% oder 13%, der Gesamtbreite des Permanentmagneten (15) beträgt.

13. Elektrischer Antriebsmotor nach Anspruch 11 oder 12, **dadurch gekennzeichnet, dass** die gestuft ausgebildete Oberflächenkante (15d) durch eine Ausnehmung (22) gebildet wird, die im axialen Querschnitt des Permanentmagneten (15) eine Mindesthöhe von wenigstens 0,5 Millimeter, insbesondere von wenigstens 0,6 Millimeter, aufweist.

14. Elektrischer Antriebsmotor nach einem der Ansprüche 6 bis 13, **dadurch gekennzeichnet, dass** wenigstens eine die vordere Stirnwand (15.3), die hintere Stirnwand (15.4), die vorauseilende Seitenwand (15.5) und/oder die nacheilende Seitenwand (15.6) jeweils mit der in Richtung des Magnetträgers (14) weisenden Grundfläche (15.2) des Permanentmagneten (15) unmittelbar verbindende Grundkante (15c) mit einer weiteren Fase (19c) versehen ist.

15. Elektrischer Antriebsmotor nach einem der Ansprüche 1 bis 14, **dadurch gekennzeichnet, dass** der Magnetträger (14) eine Nabe (20) zur Aufnahme der Motorwelle (7) aufweist, deren innere Mantelwand (20.1) mit vorspringenden Rippen (21) versehen ist, die sich insbesondere in axialer Richtung erstrecken.

16. Elektrischer Antriebsmotor nach einem der Ansprüche 1 bis 15, **dadurch gekennzeichnet, dass** der elektrische Antriebsmotor als bürstenloser Gleichstrom-Nassläufer-Pumpenantriebsmotor ausgebildet ist.

17. Pumpe, aufweisend einen elektrischen Antriebsmotor (8) nach einem der Ansprüche 1 bis 16, bei welcher der Rotor (13) in einem Nassraum (16) der Pumpe (1) drehantreibbar gelagert ist und die Außenoberflächen (15.1) der Permanentmagnete (15) in Kontakt zu einer in dem Ringspalt (12) des elektrischen Antriebsmotors (8) befindlichen Flüssigkeit des Nassraumes (16) stehen.

18. Pumpe nach Anspruch 17, **dadurch gekennzeichnet, dass** die Pumpe (1) ein von dem elektrischen Antriebsmotor (8) antreibbares Pumpenrad (3) aufweist und die Motorwelle (7) des elektrischen Antriebsmotors (8) eine Rändelung (18) aufweist, auf welcher das Pumpenrad (3) befestigt ist.

19. Haushaltsgerät, insbesondere Geschirrspülmaschine, Waschmaschine oder Trockner, aufweisend einen elektrischen Antriebsmotor (8) nach einem der Ansprüche 1 bis 16 und/oder eine Pumpe (1) nach Anspruch 17 oder 18.

## Claims

1. Electric drive motor for a pump (1), having an electrically actuatable stator winding (10) and a rotor (13) which is mounted to be rotationally drivable in the field of the stator winding (10) leaving an annular gap (12) and which has a motor shaft (7), a magnet carrier (14) sitting on the motor shaft (7) and a plurality of permanent magnets (15) which are arranged in a distributed manner around at least one casing surface (14.1) of the magnet carrier (14) and each of which has at least one outer surface (15.1) and which are attached to the magnet carrier (14) by means of a plastic body produced by overmoulding the magnet carrier (14), wherein the magnet carrier (14) has a polygonal cross-section, wherein each permanent magnet (15) has a level base surface (15.2) pointing towards the magnet carrier (14) and an outer surface (15.1) having a cylinder-casing-segment-shaped form, and wherein the permanent magnets (15) are held by form fit and/or force fit on their outer surfaces (15.1) facing the annular gap (12) by the plastic body, such that at least part of said outer surfaces (15.1) is exposed in the annular gap (12), **characterised in that**
the magnet support (14) is produced from a ferromagnetic chromium steel, namely from a ferritic or martensitic chromium steel containing at least 10.5% chromium.

2. Electric drive motor according to claim 1, **characterised in that** the magnet carrier (14) produced from a ferromagnetic chromium steel has a hexagonal cross-section.

3. Electric drive motor according to one of claims 1 or 2, **characterised in that** the magnet carrier (14) is made of a nickel-free chromium steel.

4. Electric drive motor according to one of the preceding claims, **characterised in that** the magnet carrier (14) is manufactured from a chromium steel containing 16% to 18% chromium, in particular about 17% chromium, in particular the material number 1.4016 according to EN 10027-2 (X6Cr17, AISI 430).

5. Electric drive motor according to one of the preceding claims, **characterised in that** the plastic body is designed as a plastic cage (17) which frames the respectively exposed part of the outer surface (15.1) of each permanent magnet (15) in a form fit or force fit manner.

6. Electric drive motor according to one of the preceding claims, **characterised in that** each permanent magnet (15) has at least one chamfer (19), in particular at least one chamfer (19) which runs around its outer surface (15.1) and is framed by the plastic body in a form fit manner.

7. Electric drive motor according to claim 6, **characterised in that** each permanent magnet (15) has a front end wall (15.3), a rear end wall (15.4), a leading side wall (15.5) in the direction of rotation of the rotor (13) and a trailing side wall (15.6) and the at least one chamfer (19) is formed **in that** the front end wall (15.3), the rear end wall (15.4), the leading side wall (15.5) and the trailing side wall (15.6) are each formed in a slanted manner from a position (L) perpendicular to a base surface (15.2) of the permanent magnet (15) pointing towards the magnet carrier (14) and inclined inwards by an angle (a).

8. Electric drive motor according to claim 7, **characterised in that** the angle (a) lies in a range of values between 1 and 20 degrees, in particular has a value of 8 degrees.

9. Electric drive motor according to one of claims 6 to 8, **characterised in that** the side edges (15a) respectively directly connecting the front end wall (15.3), the rear end wall (15.4), the leading side wall (15.5) and the trailing side wall (15.6) are designed to be chamfered for the formation of a single chamfer (19) running around the outer surface (15.1) of the permanent magnet (15).

10. Electric drive motor according to one of claims 6 to 8, **characterised in that** at least one surface edge (15b) directly connecting the front end wall (15.3), the rear end wall (15.4), the leading side wall (15.5) and/or the trailing side wall (15.6) respectively to the outer surface (15.1), in particular the surface edges (15b) directly connecting the front end wall (15.3) and the rear end wall (15.4) respectively to the outer surface (15.1), are provided with an additional chamfer (19b).

11. Electric drive motor according to one of claims 1 to 10, **characterised in that** at least one surface edge (15d) directly connecting the front end wall (15.3), the rear end wall (15.4), the leading side wall (15.5) and/or the trailing side wall (15.6) of each permanent magnet (15) respectively to the outer surface (15.1), in particular the surface edges (15d) directly connecting the leading side wall (15.5) and the trailing side wall (15.6) respectively to the outer surface (15.1), are designed as tiered.

12. Electric drive motor according to claim 11, **characterised in that** the surface edge (15d) designed as tiered is formed by a recess (22) which has a width in the axial cross-section of the permanent magnet (15) which is between 10% and 15%, in particular 12% or 13%, of the total width of the permanent magnet (15).

13. Electric drive motor according to claim 11 or 12, **characterised in that** the surface edge (15d) designed to be tiered is formed by a recess (22) which in the axial cross-section of the permanent magnet (15) has a minimum height of at least 0.5 millimetres, in particular of at least 0.6 millimetres.

14. Electric drive motor according to one of claims 6 to 13, **characterised in that** at least one base edge (15c) directly connecting the front end wall (15.3), the rear end wall (15.4), the leading side wall (15.5) and/or the trailing side wall (15.6) respectively to the base surface (15.2) of the permanent magnet (15) pointing towards the magnet carrier (14) is provided with a further chamfer (19c).

15. Electric drive motor according to one of claims 1 to 14, **characterised in that** the magnet carrier (14) has a hub (20) for receiving the motor shaft (7) whose inner casing wall (20.1) is provided with projecting ribs (21) which extend in particular in the axial direction.

16. Electric drive motor according to one of claims 1 to 15, **characterised in that** the electric drive motor is designed as a brushless direct current wet runner pump drive motor.

17. Pump having an electric drive motor (8) according to one of claims 1 to 16, wherein the rotor (13) is rotationally drivably mounted in a wet chamber (16) of the pump (1), and the outer surfaces (15.1) of the permanent magnets (15) are in contact with a liquid of the wet chamber (16) situated in the annular gap (12) of the electric drive motor (8).

18. Pump according to claim 17, **characterised in that** the pump (1) has an impeller (3) which can be driven by the electric drive motor (8) and the motor shaft (7) of the electric drive motor (8) has a knurling (18) to which the impeller (3) is attached.

19. Household appliance, in particular dishwasher, washing machine or dryer, having an electric drive motor (8) according to one of claims 1 to 16 and/or a pump (1) according to claim 17 or 18.

## Revendications

1. Moteur d'entraînement électrique pour une pompe (1), présentant un enroulement statorique (10) commandable électriquement et un rotor (13) logé de manière à pouvoir être entraîné par rotation dans le champ de l'enroulement statorique (10) en laissant une fente annulaire (12), lequel rotor présente un arbre moteur (7), un porte-aimants (14) situé sur l'arbre moteur (7) et plusieurs aimants permanents (15) disposés en étant répartis autour d'au moins une surface enveloppante (14.1) du porte-aimants (14), lesquels présentent respectivement au moins une surface extérieure (15.1) et sont fixés sur le porte-aimants (14) au moyen d'un corps en matière plastique fabriqué par surmoulage du porte-aimants (14), le porte-aimants (14) présentant une section polygonale, chaque aimant permanent (15) présentant une surface de base (15.2) plane orientée en direction du porte-aimants (14) et une surface extérieure (15.1) ayant une conception en forme de segment d'enveloppe cylindrique, et les aimants permanents (15), sur leurs surfaces extérieures (15.1) tournées vers la fente annulaire (12), étant maintenus par adhérence de forme et/ou adhérence de force au moyen du corps en matière plastique de manière à ce qu'au moins une partie de ces surfaces extérieures (15.1) soit dégagée dans la fente annulaire (12), **caractérisé en ce que** le porte-aimants (14) est fabriqué dans un acier chromé ferromagnétique, à savoir un acier chromé ferritique ou martensitique ayant au moins 10,5% de proportion de chrome.

2. Moteur d'entraînement électrique selon la revendication 1, **caractérisé en ce que** le porte-aimants (14) fabriqué à partir d'un acier chromé ferromagnétique présente une section transversale hexagonale.

3. Moteur d'entraînement électrique selon l'une quelconque des revendications 1 ou 2, **caractérisé en ce que** le porte-aimants (14) est fabriqué à partir d'un acier chromé exempt de nickel.

4. Moteur d'entraînement électrique selon l'une quelconque des revendications précédentes, **caractérisé en ce que** le porte-aimants (14) est fabriqué à partir d'un acier chromé ayant une proportion de chrome de 16% à 18%, notamment une proportion de chrome d'environ 17%, notamment du numéro de matériau 1.4016 suivant EN 10027-2 (X6Cr17, AISI 430).

5. Moteur d'entraînement électrique selon l'une quelconque des revendications précédentes, **caractérisé en ce que** le corps en matière plastique est réalisé comme une cage en matière plastique (17) qui entoure la partie respectivement dégagée de la surface extérieure (15.1) de chaque aimant permanent (15) par adhérence de forme et/ou de force.

6. Moteur d'entraînement électrique selon l'une quelconque des revendications précédentes, **caractérisé en ce que** chaque aimant permanent (15) présente au moins un chanfrein (19), notamment au moins un chanfrein (19) s'étendant autour de sa surface extérieure (15.1), lequel est entouré par le corps en matière plastique par adhérence de forme.

7. Moteur d'entraînement électrique selon la revendication 6, **caractérisé en ce que** chaque aimant permanent (15) présente une paroi frontale avant (15.3), une paroi frontale arrière (15.4), une paroi latérale (15.5) en avance dans le sens de rotation du rotor (13) et une paroi latérale (15.6) en retard dans le sens de rotation du rotor (13), et **en ce que** l'au moins un chanfrein (19) est formé du fait que la paroi frontale avant (15.3), la paroi frontale arrière (15.4), la paroi latérale (15.5) en avance et la paroi latérale (15.6) en arrière sont respectivement réalisées de manière oblique à partir d'une position (L) située vers l'intérieur dans un angle (a) par rapport à une position perpendiculaire située en direction de la surface de base (15.2) de l'aimant permanent (15), orientée en direction du porte-aimants (14).

8. Moteur d'entraînement électrique selon la revendication 7, **caractérisé en ce que** l'angle (a) est situé dans une plage de valeur de 1 à 20 degrés, notamment présente une valeur de 8 degrés.

9. Moteur d'entraînement électrique selon l'une quelconque des revendications 6 à 8, **caractérisé en ce que** les arêtes latérales (15a) reliant directement respectivement la paroi frontale avant (15.3), la paroi frontale arrière (15.4), la paroi latérale (15.5) en avance et la paroi latérale (15.6) en arrière sont réalisées de manière arrondie pour former un seul chanfrein (19) s'étendant autour de la surface extérieure (15.1) de l'aimant permanent (15).

10. Moteur d'entraînement électrique selon l'une quelconque des revendications 6 à 8, **caractérisé en ce qu'**au moins une arête de surface (15b) reliant directement la paroi frontale avant (15.3), la paroi frontale arrière (15.4), la paroi latérale (15.5) en avance et/ou la paroi latérale (15.6) en arrière respectivement à la surface extérieure (15.1), notamment les arêtes de surface (15b) reliant directement la paroi frontale avant (15.3) et la paroi frontale arrière (15.4) respectivement à la surface extérieure (15.1), sont munies d'un chanfrein supplémentaire (19b).

11. Moteur d'entraînement électrique selon l'une quelconque des revendications 1 à 10, **caractérisé en ce qu'**au moins une arête de surface (15d) reliant directement la paroi frontale avant (15.3), la paroi frontale arrière (15.4), la paroi latérale (15.5) en avance et/ou la paroi latérale (15.6) en arrière de chaque aimant permanent (15) respectivement à la surface extérieure (15.1), notamment les arêtes de surface (15d) reliant directement la paroi latérale (15.5) en avance et la paroi latérale (15.6) en arrière respectivement à la surface extérieure (15.1), sont réalisées en gradins.

12. Moteur d'entraînement électrique selon la revendication 11, **caractérisé en ce que** l'arête de surface (15d) réalisée en gradins est formée par un évidement (22) qui, en section axiale de l'aimant permanent (15), présente une largeur qui est comprise entre 10% et 15%, qui est notamment de 12% ou 13%, de la largeur totale de l'aimant permanent (15).

13. Moteur d'entraînement électrique selon la revendication 11 ou 12, **caractérisé en ce que** l'arête de surface (15d) réalisée en gradins est formée par un évidement (22) qui, en section axiale de l'aimant permanent (15), présente une hauteur minimale d'au moins 0,5 millimètres, notamment d'au moins 0,6 millimètres.

14. Moteur d'entraînement électrique selon l'une quelconque des revendications 6 à 13, **caractérisé en ce qu'**au moins une arête de base (15c) reliant directement la paroi frontale avant (15.3), la paroi frontale arrière (15.4), la paroi latérale (15.5) en avance et/ou la paroi latérale (15.6) en arrière respectivement à la surface de base (15.2) de l'aimant permanent (15), tournée en direction du porte-aimants (14), est munie d'un chanfrein supplémentaire (19c).

15. Moteur d'entraînement électrique selon l'une quelconque des revendications 1 à 14, **caractérisé en ce que** le porte-aimants (14) présente un moyeu (20) pour loger l'arbre moteur (7), dont la paroi enveloppante intérieure (20.1) est munie de nervures (21) en saillie, lesquelles s'étendent notamment en direction axiale.

16. Moteur d'entraînement électrique selon l'une quelconque des revendications 1 à 15, **caractérisé en ce que** le moteur d'entraînement électrique est réalisé comme moteur d'entraînement de pompe à courant continu, sans balai, à rotor noyé.

17. Pompe présentant un moteur d'entraînement (8) électrique selon l'une quelconque des revendications 1 à 16, dans laquelle le rotor (13) est logé de manière pouvant être entraîné en rotation dans un espace humide (16) de la pompe (1), et dans laquelle les surfaces extérieures (15.1) des aimants permanents (15) sont en contact avec un liquide de l'espace humide (16), se trouvant dans la fente annulaire (12) du moteur d'entraînement (8) électrique.

18. Pompe selon la revendication 17, **caractérisée en ce que** la pompe (1) présente une roue de pompe (3) pouvant être entraînée par le moteur d'entraînement (8) électrique, et **en ce que** l'arbre moteur (7) du moteur d'entraînement (8) électrique présente un moletage (18) sur lequel la roue de pompe (3) est fixée.

19. Appareil ménager, notamment lave-vaisselle, lave-linge ou sèche-linge, présentant un moteur d'entraînement (8) électrique selon l'une quelconque des revendications 1 à 16 et/ou une pompe (1) selon la revendication 17 ou 18.
